# EUROPÄISCHE PATENTSCHRIFT

(11) **EP 2 754 190 B1**
(45) Veröffentlichungstag und Bekanntmachung des Hinweises auf die Patenterteilung: **14.10.2015**
(21) Anmeldenummer: 12745634.1
(22) Anmeldetag: 07.08.2012
(51) Int. Cl.: H01M 10/625, H01M 10/6556, H01M 2/12, H01M 2/30, H01M 2/36, H01M 10/6554, H01M 10/613

(54) **BATTERIE FÜR EIN FAHRZEUG UND FAHRZEUG**
BATTERY FOR A VEHICLE, AND VEHICLE
BATTERIE POUR VÉHICULE ET VÉHICULE

(30) Priorität: 05.09.2011 DE 102011112688
(43) Veröffentlichungstag der Anmeldung: 16.07.2014
(73) Patentinhaber: Audi AG, 85045 Ingolstadt (DE)
(72) Erfinder: SCHMIDT, Jörg, 85057 Ingolstadt (DE); AVDIC, Reuf, 85055 Ingolstadt (DE); HINTERBERGER, Michael, 85055 Ingolstadt (DE); ACIKGOEZ, Erdal, 85084 Reichertshofen (DE)
(74) Vertreter: Herbst, Matthias Heinz
(86) Internationale Anmeldenummer: PCT/EP2012/003359
(87) Internationale Veröffentlichungsnummer: WO 2013/034225

(56) Entgegenhaltungen:
- WO-A1-2007/118437
- DE-A1-102007 010 739
- DE-A1-102007 010 740

## Beschreibung

Die Erfindung betrifft eine Batterie für ein Fahrzeug, welche zumindest eine Batteriezelle und eine zum Abführen von Wärme von der zumindest einen Batteriezelle ausgebildete Kühleinrichtung umfasst. Hierbei ist die Kühleinrichtung zumindest bereichsweise mit einer in einer Einbaulage der Batterie oberseitigen Wand eines Zellgehäuses der zumindest einen Batteriezelle in Anlage. Des Weiteren betrifft die Erfindung ein Fahrzeug mit einer solchen Batterie.

In Elektro- und Hybridfahrzeugen werden Hochvoltbatterien eingesetzt, wobei die von der Batterie gelieferte elektrische Spannung je nach Batterie zwischen 250 V und 600 V liegen kann. Hierfür werden einzelne Batteriezellen zusammengeschaltet, welche unterschiedliche Bauformen aufweisen können. Bei einer Rundzelle sind die Anode, ein Separator und die Kathode aufgerollt in einem üblicherweise kreiszylindrischen Gehäuse angeordnet. Prismatische Batteriezellen haben eine Zylinderform mit einem Polygon - beispielsweise einem Rechteck - als Grundfläche. Bei so genannten Pouchzellen oder Coffeebag-Zellen sind die einzelnen Lagen des elektrochemisch aktiven Materials gestapelt oder gefaltet in einer flexiblen Hülle verpackt.

Die DE 10 2009 046 801 A1 beschreibt eine Fahrzeugbatterie mit einer Mehrzahl von Batteriezellen, wobei die elektrischen Pole oder Terminals der einzelnen Batteriezellen an den Seitenflächen der jeweiligen Batteriezellen angeordnet sind. Die Batteriezellen liegen mit ihren Grundflächen auf einer ersten Kühlplatte auf, und die Batteriezellen sind von einer zweiten Kühlplatte abgedeckt.

Die US 4 756 978 A beschreibt eine Batterie mit flachen elektrischen Anschlüssen welche über eine Unterseite eines Batteriegehäuses hervorstehen. Diese Batterie wird in ein oberseitig offenes Aufnahmegehäuse eingesetzt, an dessen Boden ebenfalls flache Elektroden vorgesehen sind. Durch das Einsetzen der Batterie in das Aufnahmegehäuse von oben werden die Elektroden miteinander in Kontakt gebracht.

Die DE 10 2009 046 385 A1 beschreibt eine Batterie mit einer Mehrzahl von Batteriezellen, welche unten liegende Entgasungsöffnungen aufweisen. Die Batteriezellen stehen auf einer Kühlplatte auf, welche an der Stelle der jeweiligen Entgasungsöffnung einen Durchlass zu einem Sammelbecken aufweist.

Die US 2007/0184337 A1 beschreibt eine Batterie mit prismatischen Batteriezellen, bei welcher die elektrischen Pole der einzelnen Batteriezellen aus einer oberseitigen Wand eines Zellgehäuses der jeweiligen Batteriezelle heraustreten. Ein Gasauslass, welcher bei einem Überdruck im Inneren des Zellgehäuses öffnet, ist an einer unterseitigen Wand des Zellgehäuses angeordnet. Dadurch soll gegebenenfalls in dem Zellgehäuse vorhandener, flüssiger Elektrolyt der Schwerkraft folgend aus dem Gasauslass auslaufen können. Zwischen einem Gehäuse der Batterie und den Wänden der Zellgehäuse sind von einem Kühlmittel durchströmbare Zwischenräume vorgesehen.

Die WO 2005/043650 A2 beschreibt eine Batterie mit Rundzellen. Oberhalb der Rundzellen sind Kühlkanäle ausgebildet, über welche Wärme von den elektrischen Polen der Rundzellen abgeführt werden kann, wenn ein Lüfter die Kühlkanäle mit Kühlluft beaufschlagt.

Aus dem Stand der Technik ist es weiterhin bekannt, prismatische Batteriezellen zum Zwecke der Kühlung auf eine Kühlplatte zu stellen.

Aufgabe der vorliegenden Erfindung ist es, eine Batterie der eingangs genannten Gattung sowie ein Fahrzeug mit einer solchen Batterie zu schaffen, welche eine besonders gute Wärmeabfuhr von der zumindest einen Batteriezelle der Batterie ermöglicht.

Diese Aufgabe wird durch eine Batterie mit den Merkmalen des Patentanspruchs 1 und durch ein Fahrzeug mit den Merkmalen des Patentanspruchs 6 gelöst. Vorteilhafte Ausgestaltungen mit zweckmäßigen Weiterbildungen der Erfindung sind in den abhängigen Patentansprüchen angegeben.

Bei der erfindungsgemäßen Batterie ist die Kühleinrichtung an einer in Einbaulage der Batterie oberseitigen Wand des Zellgehäuses der zumindest einen Batteriezelle angeordnet. Dem liegt die Erkenntnis zugrunde, dass die Wärme im Betrieb der Batterie aufgrund konvektiven Wärmetransports innerhalb der Batteriezelle hin zur oberseitigen Wand des Zellgehäuses gelangt. Durch eine an der oberseitigen Wand des Zellgehäuses angeordnete Kühleinrichtung kann somit die Wärme bei weitem effizienter von der zumindest einen Batteriezelle abgeführt werden als bei Anordnung der Kühleinrichtung an einer unterseitigen Wand des Zellgehäuses. Es kann so im Betrieb der Batterie eine besonders gute Wärmeabfuhr von der zumindest einen Batteriezelle sichergestellt werden.

Die Batterie ist insbesondere in einem Fahrzeug einsetzbar, in welchem durch diese elektrische Energie für einen Antrieb des Fahrzeugs bereitgestellt wird, jedoch sind auch andere Anwendungsgebiete denkbar. Die Batterie kann nämlich auch als Energiespeicher zum Betreiben eines Verbrauchers verwendet werden, der normalerweise an einem elektrischen Versorgungsnetz (also einem öffentlichen Energieversorgungsnetz) zu betreiben ist. Beispielsweise kann es sich bei dem Verbraucher um einen Fernseher handeln, der in einer abgelegenen Berghütte betrieben werden soll. Auch für eine Notstromversorgung eines Haushalts, zum Betreiben von Haushaltsgeräten in einer Gegend ohne (oder ohne ständig verfügbare) öffentliche Energieversorgung, in einem Campingwagen oder Wohnwagen, auf einem Boot, als Notstromaggregat in einem Gebäude oder an einem Sendemast eines Mobilfunknetzes oder als Standversorgung in einem LKW kann die Batterie Verwendung finden.

Es tritt wenigstens ein elektrischer Pol der zumindest einer Batteriezelle aus einer von der oberseitigen Wand verschiedenen Wand des Zellgehäuses heraus. Dann stört der zumindest eine elektrische Pol besonders wenig, wenn es gilt, die Kühleinrichtung in eine besonders weitgehende, flächige Anlage mit der oberseitigen Wand des Zellgehäuses zu bringen.

Erfindungsgemäß treten die beiden elektrischen Pole der zumindest einen Batteriezelle aus einer in Einbaulage der Batterie unterseitigen Wand des Zellgehäuses heraus. Dann können besonders gut Kontaktelemente wie etwa Stromschienen an den elektrischen Polen der Batteriezelle angebracht werden, ohne dass die Kühleinrichtung hierbei stört. Umgekehrt behindern die elektrischen Pole und die Stromschienen nicht die Anlage der Kühleinrichtung an der oberseitigen Wand der Zellgehäuse. Über die Stromschienen kann elektrische Energie aus den Batteriezellen entnommen oder in die Batteriezellen eingebracht werden.

Als vorteilhaft hat es sich gezeigt, wenn die in Einbaulage der Batterie oberseitige Wand der Zellgehäuses eine Drucksicherungseinrichtung aufweist. Dann kann nämlich im Falle eines zu hohen Überdrucks im Inneren des Zellgehäuses die Drucksicherungseinrichtung, etwa eine Berstscheibe, öffnen und ein Medium, etwa einen dann gasförmigen Elektrolyten der jeweiligen Batteriezelle, aus dem Zellgehäuse nach oben austreten lassen. Durch das Anordnen der Drucksicherungseinrichtung an der oberseitigen Wand des Zellgehäuses ist besonders sicher vermieden, dass im störungsfreien Betrieb der Batteriezelle, wenn also der Elektrolyt in flüssiger Form vorliegt, dieser auf der Drucksicherungseinrichtung lastet.

Die Kühleinrichtung kann wenigstens eine Durchtrittsöffnung für ein über die Drucksicherungseinrichtung aus dem Zellgehäuse austretendes Medium aufweisen. Dann ist ein ungehindertes Entweichen des Mediums durch die Kühleinrichtung hindurch ermöglicht. Zusätzlich oder alternativ kann die Kühleinrichtung wenigstens eine Kanal bilden, über welchen das durch die Drucksicherungseinrichtung hindurch aus dem Zellgehäuse austretende Medium abgeleitet werden kann. Dann lässt sich der Medienstrom besonders gut an eine Stelle der Batterie leiten, wo vergleichsweise unempfindliche Komponenten der Batterie angeordnet sind.

Als weiter vorteilhaft hat es sich gezeigt, wenn die in Einbaulage der Batterie oberseitige Wand des Zellgehäuses eine Einfüllöffnung aufweist, über welche ein Elektrolyt in das Zellgehäuse einbringbar ist. Dadurch lässt sich der Elektrolyt besonders einfach und unter Vermeidung einer unerwünschten Verunreinigung der Umgebung des Zellgehäuses in dieses einfüllen.

Schließlich hat es sich als vorteilhaft gezeigt, wenn die Kühleinrichtung als von einem Kühlfluid durchströmbare Kühlplatte ausgebildet ist, welche mit der jeweils oberseitigen Wand der Zellgehäuse einer Mehrzahl von Batteriezellen in Anlage ist. Durch das Kühlfluid lässt sich besonders effektiv Wärme von den Batteriezellen abtransportieren, und durch die Ausbildung der Kühleinrichtung als Kühlplatte lässt sich besonders gut eine flächige Anlage der Kühlplatte an den Zellgehäusen der Batteriezellen erreichen.

Das erfindungsgemäße Fahrzeug weist eine Batterie auf, welche zumindest eine Batteriezelle mit einem Zellgehäuse umfasst. Hierbei tritt wenigstens ein elektrischer Pol der zumindest einen Batteriezelle in Einbaulage der Batterie im Fahrzeug aus einer von einer oberseitigen Wand des Zellgehäuses verschiedenen Wand des Zellgehäuses heraus. Dann stört dieser zumindest eine elektrische Pol nicht an der oberseitigen Wand des Zellgehäuses, und eine Kühleinrichtung kann besonders einfach an dieser oberseitigen Wand des Zellgehäuses angebracht werden. Durch das Abführen von Wärme von der oberseitigen Wand des Zellgehäuses mittels der Kühleinrichtung lässt sich eine besonders gute und effiziente Wärmeabfuhr realisieren, da die Wärme im Betrieb der Batterie nach oben steigt.

Erfindungsgemäß treten die beiden elektrischen Pole zumindest einer Batteriezelle aus einer in der Einbaulage der Batterie unterseitigen Wand des Zellgehäuses heraus, wobei die Kühleinrichtung der Batterie zumindest bereichsweise mit der in Einbaulage der Batterie oberseitigen Wand des Zellgehäuses der zumindest einen Batteriezelle in Anlage ist.

Die für die erfindungsgemäße Batterie beschriebenen Vorteile und bevorzugten Ausführungsformen gelten auch für das erfindungsgemäße Fahrzeug.

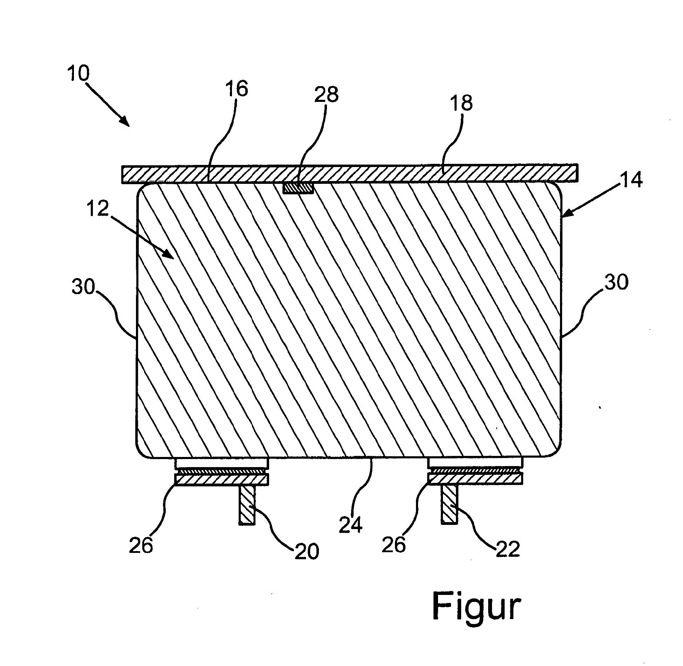

Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnung.

Diese zeigt schematisch eine Batterie für ein Fahrzeug, wobei die elektrischen Pole prismatischer Batteriezellen der Batterie aus einer unterseitigen Wand eines Zellgehäuses der Batteriezelle heraustreten, und wobei an einer oberseitigen Wand des Zellgehäuses eine Kühlplatte angeordnet ist.

Eine in der Figur gezeigte Batterie 10 ist als Lithium-Ionen-Hochvoltbatterie für ein Fahrzeug ausgebildet. Eine solche Hochvoltbatterie dient dem Speichern und Freigeben von elektrischer Energie, welche für einen oder mehrere elektrische Antriebsmotoren des Fahrzeugs zur Verfügung gestellt wird.

Die Batterie 10 umfasst eine Mehrzahl von prismatischen, vorliegend eine rechteckige Grundfläche aufweisenden Batteriezellen 12, welche derart in einem Stapel angeordnet sind, dass die Wände von Zellgehäusen 14 der jeweiligen Batteriezelle 12 miteinander fluchten.

In der Figur ist die Batterie 10 in ihrer Einbaulage im Fahrzeug gezeigt. Hierbei liegt auf einer oberseitigen Wand 16 des Zellgehäuses 14 eine Kühlplatte 18 auf. Innerhalb der Batteriezelle 12 im Betrieb der Batterie 10 aufsteigende Wärme kann so besonders gut von der Kühlplatte 18 abgeführt werden. Die Kühlplatte 18 weist Kühlkanäle auf, welche im Kühlbetrieb von einer Kühlflüssigkeit durchströmt werden und so Wärme von den Batteriezellen 12 abführen.

Die Kühlplatte 18 ist vorliegend vollflächig mit der oberseitigen Wand 16 der Zellgehäuse 14 der Batteriezellen 12 in Anlage gebracht, da die elektrischen Pole - nämlich eine Anode 20 und eine Kathode 22 - der jeweiligen Batteriezelle 12 aus einer unterseitigen Wand 24 des Zellgehäuses 14 heraustreten und so die Anlage der Kühlplatte 18 an der oberseitigen Wand 16 nicht behindern.

In der Figur sind des Weiteren Stromschienen 26 gezeigt, über welche die Anoden 20 und die Kathoden 22 der Batteriezellen 12 der Batterie 10 elektrisch miteinander verbunden werden, wobei eine elektrische Reihenschaltung und/oder eine elektrische Parallelschaltung mittels der Stromschienen 26 realisierbar ist.

Beim Anbringen der Stromschienen 26 an den Anoden 20 beziehungsweise Kathoden 22 der Batteriezellen 12, welches insbesondere durch Verschrauben und/oder Verschweißen und/oder Kleben erfolgen kann, stört die Kühlplatte 18 nicht, da sie sich auf der gegenüberliegenden Seite des Stapels der Batteriezellen 12 befindet.

Als Drucksicherungseinrichtung weist die jeweilige Batteriezelle 12 eine Öffnung 28 mit einer Berstscheibe oder einer Membran auf, welche vorliegend in der oberseitigen Wand 16 des Zellgehäuses 14 angeordnet ist. Bei einer Überhitzung und dem damit einhergehenden Druckanstieg im Inneren des Zellgehäuses 14 gibt die Berstscheibe oder Membran nach und gasförmige Stoffe, etwa gasförmiger Elektrolyt und/oder Rauchgase, können aus dem Zellgehäuse 14 austreten. In alternativen Ausführungsformen kann die Öffnung 28 an einer der Seitenwände 30 des Zellgehäuses 14 vorgesehen sein.

Um ein ungehindertes Entweichen von im Fehlerfall aus der Batteriezelle 12 durch die Öffnung 28 austretendem Gas zu ermöglichen, kann in der Kühlplatte 18 eine Durchtrittsöffnung, etwa in Form einer Bohrung vorgesehen sein, welche mit der Öffnung 28 fluchtet. Zusätzlich oder alternativ kann die Kühlplatte 18 einen Kanal bilden, über welchen das über die Öffnung 28 aus der Batteriezelle 12 austretende Gas gezielt abgeleitet werden kann.

In der oberseitigen Wand 16 des Zellgehäuses 14 ist des Weiteren eine (nicht gezeigte) Einfüllöffnung vorgesehen, über welche vor dem Anbringen der Kühlplatte 18 auf dem Stapel der Batteriezellen 12 der Elektrolyt in die Batteriezellen 12 eingefüllt werden kann.

## Patentansprüche

1. Batterie für ein Fahrzeug, mit zumindest einer Batteriezelle (12) und mit einer zum Abführen von Wärme von der zumindest einen Batteriezelle (12) ausgebildeten Kühleinrichtung (18), welche zumindest bereichsweise mit einer Wand (16) eines Zellgehäuses (14) der zumindest einen Batteriezelle (12) in Anlage ist, wobei die Kühleinrichtung (18) an einer in einer Einbaulage der Batterie (10) oberseitigen Wand (16) des Zellgehäuses (14) der zumindest einen Batteriezelle (12) angeordnet ist, **dadurch gekennzeichnet, dass**
die beiden elektrischen Pole (20, 22) der zumindest einen Batteriezelle (12) aus einer in der Einbaulage der Batterie (10) unterseitigen Wand (24) des Zellgehäuses (14) heraustreten, wobei die Kühleinrichtung (18) als Kühlplatte ausgebildet ist, welche mit der jeweils oberseitigen Wand (16) der Zellgehäuse (14) einer Mehrzahl von Batteriezellen (10) in Anlage ist.

2. Batterie nach Anspruch 1,
**dadurch gekennzeichnet, dass**
die in der Einbaulage der Batterie oberseitige Wand (16) des Zellgehäuses (14) eine Drucksicherungseinrichtung (28) aufweist.

3. Batterie nach Anspruch 2,
**dadurch gekennzeichnet, dass**
die Kühleinrichtung (18)
- wenigstens eine Durchtrittsöffnung für ein über die Drucksicherungseinrichtung (28) aus dem Zellgehäuse (14) austretendes Medium und/oder
- wenigstens einen Kanal zum Ableiten von über die Drucksicherungseinrichtung (28) aus dem Zellgehäuse (14) austretendem Medium
aufweist.

4. Batterie nach einem der Ansprüche 1 bis 3,
**dadurch gekennzeichnet, dass**
die in Einbaulage der Batterie (10) oberseitige Wand (16) des Zellgehäuses (14) eine Einfüllöffnung aufweist, über welche ein Elektrolyt in das Zellgehäuse (14) einbringbar ist.

5. Batterie nach einem der Ansprüche 1 bis 4,
**dadurch gekennzeichnet, dass**
die Kühlplatte von einem Kühlmedium durchströmbar ausgebildet ist.

6. Fahrzeug mit einer Batterie (10), welche zumindest eine Batteriezelle (12) mit einem Zellgehäuse (14) umfasst, wobei wenigstens ein elektrischer Pol (20, 22) der zumindest einen Batteriezelle (12) aus einer Wand (24) des Zellgehäuses (14) heraustritt, wobei der wenigstens eine elektrische Pol (20, 22) in einer Einbaulage der Batterie (10) im Fahrzeug aus einer von einer oberseitigen Wand (16) des Zellgehäuses (14) verschiedenen Wand (24) des Zellgehäuses (14) heraustritt,
**dadurch gekennzeichnet, dass**
die beiden elektrischen Pole (20, 22) der zumindest einen Batteriezelle (12) aus einer in der Einbaulage der Batterie (10) unterseitigen Wand (24) des Zellgehäuses (14) heraustreten, wobei eine als Kühlplatte ausgebildete Kühleinrichtung (18) der Batterie (10) zumindest bereichsweise mit einer in der Einbaulage der Batterie (10) oberseitigen Wand (16) des Zellgehäuses (14) der zumindest einen Batteriezelle (12) in Anlage ist.

## Claims

1. Battery for a vehicle, comprising at least one battery cell (12) and comprising a cooling device (18) designed to dissipate heat from the at least one battery cell (12), which cooling device is in contact, at least in regions, with a wall (16) of a cell housing (14) of the at least one battery cell (12), the cooling device (18) being arranged on a wall (16) of the cell housing (14) of the at least one battery cell (12), which wall is on the upper face when the battery (10) is in an installation position, **characterised in that** the two electrical terminals (20, 22) of the at least one battery cell (12) emerge from a wall (24) of the cell housing (14), which wall is on the lower face when the battery (10) is in the installation position, the cooling device (18) being formed as a cooling plate which is in contact with each upper wall (16) of the cell housing (14) of a plurality of battery cells (10).

2. Battery according to claim 1, **characterised in that** the wall (16) of the cell housing (14), which wall is on the upper face when the battery is in the installation position, comprises a pressure relief device (28).

3. Battery according to claim 2, **characterised in that** the cooling device (18) comprises
- at least one through-opening for a medium emerging from the cell housing (14) via the pressure relief device (28), and/or
- at least one channel for draining a medium emerging from the cell housing (14) via the pressure relief device (28).

4. Battery according to any of claims 1 to 3, **characterised in that** the wall (16) of the cell housing (14), which wall is on the upper face when the battery (10) is in the installation position, comprises a fill opening by means of which an electrolyte can be introduced into the cell housing (14).

5. Battery according to any of claims 1 to 4, **characterised in that** the cooling plate is designed in such a way that a cooling medium can flow therethrough.

6. Vehicle having a battery (10) which comprises at least one battery cell (12) having a cell housing (14), at least one electrical terminal (20, 22) of the at least one battery cell (12) emerging from a wall (24) of the cell housing (14), the at least one electrical terminal (20, 22) emerging from a wall (24) of the cell housing (14) which is different from a wall (16), on the upper face, of the cell housing (14), when the battery (10) is in the installation position in a vehicle, **characterised in that** the two electrical terminals (20, 22) of the at least one battery cell (12) emerge from a wall (24) of the cell housing (14), which wall is on the lower face when the battery (10) is in the installation position, a cooling device (18), which is formed as a cooling plate, of the battery (10) being in contact, at least in regions, with a wall (16) of the cell housing (14) of the at least one battery cell (12), which wall is on the upper face when the battery (10) is in the installation position.

## Revendications

1. Batterie destinée à un véhicule, comprenant au moins un élément de batterie (12) et un dispositif de refroidissement (18) conçu pour évacuer la chaleur du au moins un élément de batterie (12), lequel dispositif s'applique au moins par zones sur une paroi (16) d'un boîtier d'élément (14) du au moins un élément de batterie (12), dans laquelle le dispositif de refroidissement (18) est aménagé sur une paroi (16) du boîtier (14)-supérieure en position de montage de la batterie (10) - du au moins un élément de batterie (12),
**caractérisée en ce que** :
les deux pôles électriques (20, 22) du au moins un élément de batterie (12) ressortent d'une paroi (24) du boîtier d'élément (14) inférieure en position de montage de la batterie (10), dans laquelle le dispositif de refroidissement (18) est conformé en plaque de refroidissement, qui s'applique sur la paroi respectivement supérieure (16) du boîtier (14) d'une pluralité d'éléments de batterie (10).

2. Batterie selon la revendication 1,
**caractérisée en ce que** :
la paroi du boîtier d'élément (16) supérieure en position de montage de la batterie (14) présente un dispositif de décharge de pression (28).

3. Batterie selon la revendication 2,
**caractérisée en ce que** :
le dispositif de refroidissement (18) présente :
- au moins une ouverture de passage pour un milieu sortant du boîtier d'élément (14) via le dispositif de décharge de pression (28) et/ou
- au moins un canal pour évacuer le milieu sortant du boîtier d'élément (14) via le dispositif de décharge de pression (28).

4. Batterie selon l'une quelconque des revendications 1 à 3,
**caractérisée en ce que** :
la paroi du boîtier d'élément (16) supérieure en position de montage de la batterie (10) présente une ouverture de remplissage (14) par laquelle un électrolyte peut être introduit dans le boîtier d'élément (14).

5. Batterie selon l'une quelconque des revendications 1 à 4,
**caractérisée en ce que** :
la plaque de refroidissement est conçue de manière à pouvoir être parcourue par un agent réfrigérant.

6. Véhicule équipé d'une batterie (10) qui comprend au moins un élément de batterie (12) avec un boîtier d'élément (14), dans lequel au moins un pôle électrique (20, 22) du au moins un élément de batterie (12) ressort d'une paroi (24) du boîtier d'élément (14), dans lequel le au moins un pôle électrique (20, 22) ressort, en position de montage de la batterie (10) dans le véhicule, d'une paroi (24) du boîtier d'élément (14) différente d'une paroi supérieure (16) du boîtier d'élément (14),
**caractérisé en ce que** :
les deux pôles électriques (20, 22) du au moins un élément de batterie (12) ressortent d'une paroi (24) du boîtier d'élément (14) en position inférieure en position de montage de la batterie (10), dans lequel un dispositif de refroidissement (18) de la batterie (10) conçu en plaque de refroidissement s'applique au moins par zones sur une paroi (16) - supérieure en position de montage de la batterie (10) - du boîtier d'élément (14) du au moins un élément de batterie (12).
